# EUROPEAN PATENT SPECIFICATION

(11) **EP 3 279 571 B1**
(45) Date of publication and mention of the grant of the patent: **14.10.2020**
(21) Application number: 17184179.4
(22) Date of filing: 01.08.2017
(51) Int. Cl.: F24D 19/10, G05D 23/19

(54) **A CONTROL SYSTEM FOR A HEATING PLANT AND A CONTROL METHOD**
STEUERSYSTEM FÜR EINE HEIZUNGSANLAGE UND STEUERUNGSVERFAHREN
SYSTÈME DE CONTRÔLE POUR UNE INSTALLATION DE CHAUFFAGE ET PROCÉDÉ DE CONTROLE

(30) Priority: 03.08.2016 IT 201600081891
(43) Date of publication of application: 07.02.2018
(73) Proprietor: Russi, Franco, 25040 Montecampione Artogne (BS) (IT)
(72) Inventor: RUSSI, Massimo Luigi, 25040 Montecampione Artogne (BS) (IT)
(74) Representative: Rastelli, Franco

(56) References cited:
- EP-A1- 0 014 612
- EP-A2- 0 131 438
- EP-A2- 2 770 263
- GB-A- 2 528 946
- US-A- 4 433 810
- US-A1- 2013 048 745
- US-B1- 8 844 834

## Description

### BACKGROUND OF THE INVENTION

The subject matter of the present invention is a system capable of controlling a heating system or plant by reintroducing only the heat lost by the plant with a method that identifies a virtual heat index deriving from the type of plant and from variations in the climatic temperature.

The innovative method described below is not limited only to heating systems or plants of civil buildings but to all those plants that use a carrier liquid both to heat and cool buildings as well as industrial manufacturing processes.

Purely to facilitate interpretation and clarity of the topic, only heating plants shall be referred to herein, as the concept of application remains the same.

As it is known, in a heating plant, a carrier, normally consisting of water, conveys the heat from a central thermal unit to radiators, or diffusers, positioned inside the building to be heated. The water is heated by the boiler/burner assembly and is driven into the building by means of circulators, i.e., pumps.

The water, through a series of pipes, reaches the diffusers, heating them, and the time for transfer of the heat to the diffusers is limited to the time it takes for the water to pass through and therefore, after the water has passed through the diffusers, regardless of the amount of heat transferred, it returns to the central thermal unit through the return pipes.

It is evident that, circulating continuously, only a part of the heat can be transferred to the diffusers, while a great deal of the remaining part is unnecessarily released, i.e. lost, along all the distribution pipes.

Subsequently, to make the plant more efficient, numerous devices, all aimed at saving and at increasing efficiency, have been added.

One of these, particularly important, from which the whole design philosophy of heating plants derives, is the mixer valve, also called three-way valve.

The function of the mixer valve is as follows: the boiler heats the water always to the maximum temperature available, typically +75°C. This high temperature, which as will be seen is essential to be able to reduced it through mixing with cooler return water from the plant, must never reach the diffusers both because this would create excessively hot points, which are very harmful (formation of condensation and moulds), in the surrounding environment and also because the heating bodies would become dangerous.

The mixer valve is necessary in particular to limit consumptions and obtain maximum comfort, and therefore the temperature of the water must vary, to a greater or lesser degree, not only based on the variations of outside temperatures, e.g. day/night, but also taking account of these daily variations within the scope of seasonal variations. An example of the different temperature ranges: in November, from +2°C to +6° C; in January, from -2°C to 0° C.

The task of adapting the operating temperatures of the water to the different requirements has been assigned to the mixer valve, without manual intervention by humans. This valve operates on the principle of mixing the hotter water coming from the boiler with the cooler water returning from the building. The mixing ratio, and consequently the result of mixing, changes according to immediate requirements.

By way of example, during the colder periods of the year, the water must be sent to the diffusers at higher temperatures, e.g. 60°C, so that the water, output from the boiler at 75°C, is mixed with the cooler return water from the building, e.g. at 40°, and the final result is that water at 60°C is sent to the diffusers while the water that actually returns to the boiler, after treatment by the mixer valve, is partially heated from 40° to 50° to the advantage of saving, as the boiler uses less energy to restore less degrees.

Therefore, the mixer has the task of mixing the return water from the plant with the water output from the boiler and the result of this mixing must change dynamically with the variation of daily and seasonal climatic temperatures.

It is evident that, to obtain similar results, it is necessary to continuously measure the water output from the mixer valve and adapt it to immediate requirements. For this reason, the water in the plant is always in movement, subject to the disadvantage of cooling mentioned above, although this all falls within the philosophy of current systems.

Therefore, to summarize, the mixer valve, based on the outdoor temperature values, based on the temperature values of the water sent to the building, based on a software and on tables input in a management program and on statistical climatic curves, determines the degree to which the gate valves open to mix the very hot water coming from the boiler with the cooler water returning from the plant. The colder is the outside temperature the greater the hot water amount output from the boiler being mixed with the relatively cold return water from the plant.

All this being stated, in order for the mixer valve to operate correctly, the system must be provided with:
a) one or more outdoor climate sensors to measure the outdoor temperature, taking great care over their positioning, so that they are not subject to false temperature readings, which must be very close to the true value (absolute value);
b) a sensor that measures, instant by instant, the temperature value of the water to be sent to the diffusers;
c) climatic curves obtained from optimal statistical studies, but that being statistics ignore the actual need of the site, its exposure, insulation and consequently the specific loss of heat of the site to be heated;
d) a management program provided with dedicated software that examines all the parameters and sends the mixer valve controls for opening and closing the gate valves.

Dynamic and real-time control of the temperature of the water towards the building requires continuous movement of the water and this requirement has some negative effects:
a) the water in movement transfers heat to the distribution system becoming cooler in part;
b) the movement involves a brief phase of contact between water and the diffusers, preventing the release of all the heat effectively available in the water, and therefore only a minimum part of this heat is transferred to the diffusers and from these to the building;
c) a great deal of energy is required to supply the diffusers continuously;
d) upon returning to the boiler the water must always be heated, as its operating temperature value must always be integrated, even if only by a few degrees.

The thermal hysteresis of the various materials varies greatly between one another and therefore while the water carrier is heated and cools somewhat rapidly, the diffusers require much more time to remove heat from the water, with the result that the water, still with a great deal of heat that should be transferred to the diffusers, driven by the circulators, does not have sufficient time to release all its heat and returns to the boiler still hot, but cooled sufficiently that the boiler continues to heat it to return it to the operating value.

In any case, regardless of the saving, if everything were to operate in accordance with the theory, a plant implemented in this manner would require no further operations to adapt the system to variations in climate, but in actual fact this is not the case, as often, or rather almost always, adaptations are necessary for the following reasons:
- because the climate sensor(s) has/have not been positioned correctly, e.g., the variation of the earth's position in relation to the sun during the different seasons has not been taken into account;
- because the climate in the place of activation has been misinterpreted with respect to the indications given by the climate curves proposed by the manufacturer (bearing in mind that these are all obtained statistically and often not in line with the effective needs of the site);
- because the exposure of the building with respect to the sun and its variability during the different seasons has not been taken into account;
- because the heat loss of the building has not been taken into account.

For all these reasons, any expert maintenance technician knows that at least 3-4 operations are required during the period in which the heating is switched on to best adapt the plant managed.

It is not by chance that many plants are today equipped with remote control and monitoring systems to avoid control operations that are often unnecessary.

In respect of the aforesaid negative aspects due to the philosophy used for the production of heating plants and to limit waste caused by the continuous movement of the water in these heating plants, a method has been studied for over thirty years and applied for around ten years, whose operation is described in the Italian patent n° 1374040, which provides exploitation of the thermal hysteresis of the materials of which a heating plant is composed, after having identified and grouped together in precise tables the heating and cooling times of the single materials of which the diffusers are made.

The method described in the aforesaid patent provides to start the boiler for a given time and when the plant (pipes and diffusers) has reached a satisfactory temperature useful for achieving comfort, the circulator(s) (pump(s)) is/are stopped. The water in the plant and in the diffusers stops and ceases to lose heat unnecessarily. The diffusers thus have time to absorb the heat carried by the water and to diffuse it into the room to be heated and in this case, all the heat contained in the water remains available for the room.

Based on precise time tables, stop of the circulators is correctly determined and at the end of the established time, before the whole plant has cooled down completely, the circulator starts again, reactivating the boiler. Upon restart, although the water returning from the plant is cool, it still has sufficient heat and only requires a short time, and therefore a small amount of energy, to be heated once again.

With the passing of time, as the difference in temperature between room and diffusers is reduced, a further advantage for the purpose of saving will be obtained, i.e., the OFF time of the circulators can be extended even if the ON time of the boiler remains constant. All in all, there will be a reduction in fuel consumptions as over the course of 24 hours the ON cycles will be reduced. Besides the advantage of significantly reducing fuel consumption, the reduction in power consumption due to the circulators being switched off is evident.

For automatic control of the temperature in the system the room thermostat is used, which for plants with low power is an objective reality, while for larger powers it is a need that must be conceptually introduced. The thermostat is positioned in one of the rooms of the building to be heated, which becomes the reference for the entire plant. It is usually preferable to choose the coldest room, the one farthest from the central thermal unit or most exposed to the coldest geographical area.

When the thermostat has reached the set temperature in this most critical room, then all the other rooms of the building will also be warm. This method applied in over 2000 cases produced savings of around 30%, with comfort results of the utmost satisfaction for users.

Although the aforesaid method includes excellent results in terms of saving, it showed some negative aspects that are not easy to solve.

With this system it was found that the room takes longer to reach the desired optimal temperature each time the plant restarts. Unfortunately, due to the time bands in Italy, restart takes place systematically at least once or twice a day. This problem was easily solved by eliminating the apparatus from the plant for the first half hour but to the detriment of saving (even if only a few percentiles).

Self-calibration, implemented with the method indicated above, entails increasing the ON times beyond those effectively required by the plant in order to be sure that the building in any case reaches the steady state temperature. This also leads to a slight decrease in saving.

Another problem, more of an operational nature, encountered in large plants known to be devoid of thermostats, consists in having to connect the apparatus with a thermostat either with a wireless method or by installing wires. In this case the considerably advantage of easy, fast and trouble-free installation is reduced as very often there is no direct connection (electrical duct) between the central thermal unit and the building.

It is also impossible to introduce specific values to offset the higher or lower heat losses to which the building is subject (more or less insulation). In other words, while it is possible to act on the calibration of the apparatus to best adapt the system to the type of building, it is not possible to automate the search for this parameter and in order to obtain the best and the maximum output it is always necessary to spend time after start of the plant.

In view of the excellent saving and comfort results obtained with the thermal hysteresis method, it was decided to improve this by attempting to also eliminate the problems encountered in numerous systems and also to extend its applicability to other types of plant, such as swimming pools, cooling, recirculation air conditioning, industrial plants, etc.

Following the aforesaid reflections and the desire to improve operation of the system described above, a new method has been proposed, comprising the control and management of a heating plant by measuring and analysing the temperature of the return water from the building after each OFF time.

It must be stated that the method consists in detecting the value of the temperature of the water at the point in which it returns to the central thermal unit before it undergoes treatments of any kind.

When the plant is operating at steady state and everything is operating regularly the temperature is measured at the point indicated, e.g. 45°C, and this becomes the reference value.

Boiler ON and OFF cycles are introduced by means of stopping and restarting the circulators.

Each complete operating cycle is composed of:
- an ON time, in which the water is moved (boiler restart) and is restored to the preset reference temperature (e.g. 45°C), always measured at the same point (return from the building);
- an OFF time, i.e., with the water stopped and the boiler switched off, predetermined by the tables relating to the hysteresis of the materials.

The ON time will never be the same because after each OFF cycle the return temperature from the building can change due to the temperature variations and/or losses undergone by the building and consequently the ON time required to restore the water always to the same temperature varies (e.g. from 40° to 45°C it differs from the time required to restore the water from 38° to 45°C).

Each plant will have its OFF time that distinguishes one plant from another and remains unvaried for that plant. The OFF time, set manually, derives from the tables of the thermal hysteresis times of the materials of which the plant is formed (aluminium, cast iron, iron, radiant panels) with an additional element depending on the capacity of that building to retain the accumulated heat (insulation).

Therefore, after the OFF time has been set on the apparatus, at the end of the OFF cycle the value of the temperature reached by the water at that point will be read and, by comparing this value with the value read at the end of the previous cycle, it can be understand if during the OFF time there have been any more or less important variations, such as sudden volumetric variations undergone by the plant (e.g., switch on or off of the heating in apartments of the building) or less important and slower variations, such as daily (day/night) or seasonal climate variations that have caused or are causing the temperature variations of the water.

One of the advantages of this system consists in the automatic ability of the apparatus to adapt to new requirements of the ON time; in fact, during the ON phase the plant is not switched off until the steady state temperature value of the plant (in the example 45°C) is once again reached. It is evident that the ON time varies or can vary at each subsequent cycle and it is even more evident that only the effective heat lost in the OFF time is input into the plant, without any additions.

Self-calibration of the system is based on comparison of the temperature values measured at precise times of the phases of each cycle at the point of return of the water to the central thermal unit.

Although the method described is absolutely excellent in theory, in current practice it has a serious fault due to an entirely unknown phenomenon: accumulation of heat in proximity to the central thermal unit.

In the numerous applications effected, while there was definite confirmation of the correctness of the reasonings carried out, an entirely unexpected phenomenon was also identified, which upset the operating practicality of the system. In particular, it was found that, after the OFF time, the temperature of the water does not follow a logic that enables coherent results to be determined through comparison; in fact often, instead of decreasing the temperature remains unchanged or even increases. An example is provided to better explain the phenomenon: after reaching the operating temperature (in the example 45°C), the OFF phase starts; at the end of the established OFF phase and before the plant starts again, the temperature, always measured at the same point, can for example be 47°C, or 46°C or 45°C, all absolutely irrational values. Even worse, it was found that on several consecutive cycles the value measured can be very different from the preceding value. The only certainty found is that the phenomenon is linked to the type of plant, to the powers involved, to the position of the central thermal unit (ground floor or below ground level) and to other uncertain factors, such as the size of the pipes and the amount of water circulating.

It is evident that, basing the whole self-calibration system on comparison of the temperatures measured at certain specific times and these values being unreliable as they are not constant, the whole self-calibration system has proved to be unreliable due to its instability.

In fact, the apparatus is able to follow and act on small day/night climate variations, but starts to drift in the case of more important variations and returns to correct operation too slowly, even after several days from the drift, provided that no other significant climate variations take place in the meantime.

The savings obtained, in any case extraordinary and in the order of 50-60%, have produced a substantial impetus towards the use of this apparatus and, to make up for the serious functional deficiency, aids such as remote control and monitoring systems have been used; these have become essential for correct operation, as they allow remote action to be taken on the parameters of the apparatus to correct temperature drifts. Added to this is the difficulty of remote connection, not always possible from heating plants without the use of costly and complicated systems. Often the GSM signal is masked in heating plants.

US8844834 discloses a thermal targeting technology used to continuously adjust boiler target temperature to the minimum necessary to satisfy the required heating load. Responsive to and initiated by a first call for heat, boiler target temperature is reduced by a predetermined amount upon or subsequent to the call for heat. Once the boiler temperature reaches this new target, a call timer is activated. If demand for heat is satisfied before a time set point is reached, the system ceases providing additional heat energy until the next heat demand. Responsive to and initiated by a next call for heat, the boiler target temperature is again reduced by the predetermined amount upon or subsequent to this next call for heat. Each time the heat demand is satisfied within the predetermined time interval, the boiler target temperature is reduced. If heat demand is not satisfied, a thermal boost is provided at set time intervals until the call for heat is removed.

EP0014612 discloses a device having a comparator which controls the functioning of the boiler as a function of the difference between a first reference value displayed at and the temperature of return water measured by the probe. The first reference value is displayed by a regulator as a function of the difference between a second reference value displayed at and a function of the ambient temperatures measured by the probes. The boiler is controlled overridingly from the probe for the temperature of water leaving the boiler, if one of the thermocontacts, which are respectively adjusted to an external temperature threshold and an internal surface temperature threshold of an external wall, is closed.

### SUMMARY OF THE INVENTION

The aim of the present invention is to provide a control system and method for heating plants that overcomes the problems of the prior art indicated above.

Within this aim, a particular object of the invention is to produce a system that manages the heat effectively removed from the plant in the OFF times with a control method that enables a reliable reference parameter to be identified, which is unrelated to the type of plant or to the type of building to be heated.

This and other objects, which will become more apparent below, are achieved by a a heating plant and by a control method of a heating plant as claimed in the appended claims.

### BRIEF DESCRIPTION OF THE DRAWINGS

Further characteristics and advantages of the subject matter of the present invention will become more apparent through examination of the description of a preferred but not exclusive embodiment of the invention, illustrated by way of non-limiting example in the accompanying drawing, wherein:

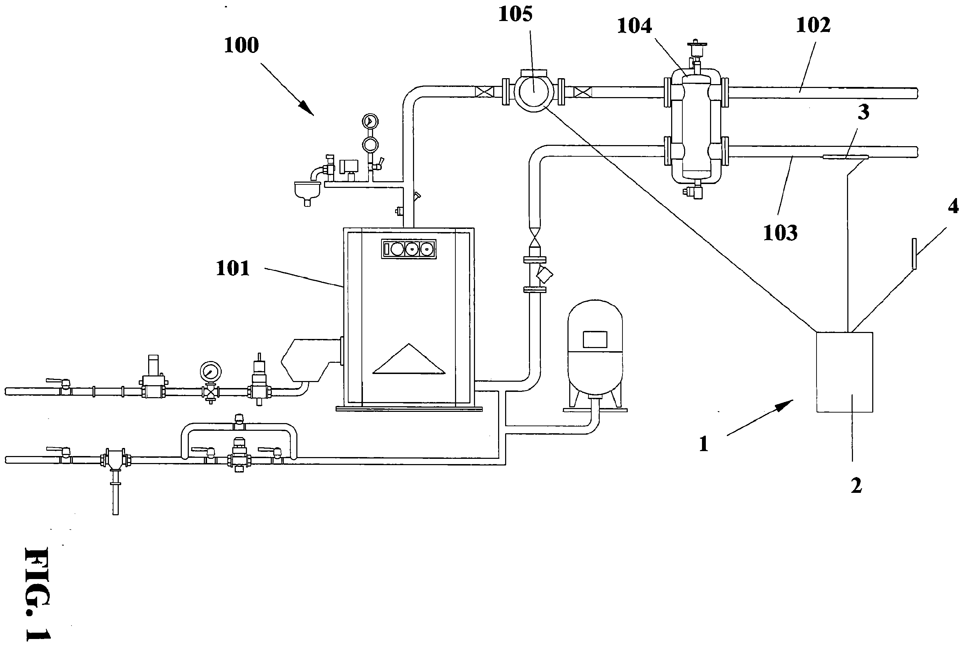

Fig. 1 schematically shows a heating plant provided with the control system according to the present invention.

### DESCRIPTION OF PREFERRED EMBODIMENTS

With particular reference to the numerical symbols of the aforesaid figure, the system according to the invention, indicated as a whole with the reference numeral 1, is applied to a heating plant 100 comprising a boiler 101 inside which is a chamber for heating liquid, a plurality of supply pipes 102, through which the hot water is sent to a plurality of radiators, not visible in the figure, and a plurality of return pipes 103 through which the liquid from the radiators returns to the boiler.

Unlike conventional plants, this plant no longer requires the mixer valve 104, and has only one circulator 105, normally consisting of a pump.

As will be apparent from the description below, the system according to the present invention acts as heat metering device and therefore excludes the mixer valve and related management software from the plant.

The cost of these apparatus is very high and maintenance is costly and precarious.

In Fig. 1 the mixer valve 104 is indicated, as it could be present in an existing plant; however, its presence is superfluous and irrelevant, and it is not necessary to eliminate it or modify the existing plant; instead, in the case of a new plant, it does not require to be installed.

According to the present invention, the control system 1 comprises a control unit 2 adapted to control the boiler 101 and the circulator 105, a return temperature sensor 3, associated with a return pipe 103, and an outdoor temperature sensor 4.

The present invention does not require removal of the mixer valve, if present, as it is disabled and remains fully open at all times.

It is evident that on a new plant the installation of the mixer valve and its management system can be avoided.

The control method according to the present invention consists in identifying a reliable reference parameter which is unrelated to the type of plant or to the type of building to be heated.

According to the present invention, an individual heat index, even virtual, is used, which, for the management system, becomes the reference unit for the whole system.

From the introduction it follows irrefutably that the system must recover, at each ON cycle, the temperature lost from the water upon return to the central thermal unit after each OFF cycle of the plant and the value to which the water must be restored is:
- always the same in the absence of variations of heat loss from the building towards the outside and this occurs if the outdoor temperature has not undergone any variation;
- higher if the outdoor temperature decreases, hence the heat loss towards the outside increases;
- lower if the outdoor temperature increases, hence the heat loss towards the outside decreases.

By using the method of the virtual heat index identified, it is possible to determine the variations in temperature due to climate oscillations, either slow or fast, and the thermal "response" of the building to these oscillations. In any case, it is evident that the invention is capable of managing the plant adequately, by metering, in substitution of the mixer valve, the exact amount of heat that must be restored in the building after each cycle.

All this has allowed excellent results to be obtained, both as regards savings and as regards the comfort of the building to be heated as all the following indisputable operating needs have been satisfied at the same time:
1) the temperature of the water entering the heating plant must change as a function of the outdoor temperature, both for small day/night variations and for more important variations linked to the seasons or to sudden variations;
2) the ON time, switch-on of the burner, must be as free as possible from parameters or statistical patterns, but must also be very elastic and vary in an entirely natural manner to fulfil the function of regulating the heat flow based on the effective requirements of the plant determined both by climate variations and by volumetric variations (inclusion and exclusion of apartments/areas);
3) the OFF time does not require to be dynamically variable as it is only needed to determine, during activation of the system, the comfort temperature desired in the building (e.g. 22 minutes OFF = 20°C - 25 minutes OFF = 19°C), and therefore must be variable, but only to correctly adapt the apparatus to the type of plant and to the insulating properties of the building;
4) it is no longer necessary to use circulators with variable volume as it is the system that meters and restores the exact amount of heat lost.

All the aforesaid points are satisfied by using the method described below.

It must be stated that the temperature outside the building, measured at any point, even if having very different values from the absolute value, follows, at all the points, the same temperature variations as the absolute value and with almost the same trend.

Suppose that the absolute outdoor temperature is 6°C and that over the course of the day this temperature varies with a certain trend. By placing several sensors distributed in other positions of the building it can be noted that, even with different temperature values, the change will also take place at all the other points of the building and the variations, even with different relative values from one another, will all follow the same trend.

Naturally, it is essential to ensure that, regardless of the geographical exposure point, the outdoor temperature is not measured at points that can be influenced by the presence of the sun on the sensor.

The unquestionably excellent result obtained, both in relation to practicality of installation and to operation, was achieved by positioning the outdoor sensor 4 on the threshold of the aeration window of the central thermal unit, and ensuring that the sun never shines directly on the fixing point.

This being stated, it is clear that the temperature variation to which the building is subject can be detected instant by instant, and therefore a first useful parameter for determining the reference heat index of the building has been identified.

The second useful parameter for determining the reference index is the temperature of the water, upon return to the central thermal unit, detected only at given times of operation of the method according to the present application.

To determine the reference heat index the plant must be started and operating in steady state. When everything is in perfect condition, the temperature value that the return water has reached in that precise instant is detected, regardless of whether it is day or night, autumn or late winter, the only important factor being that the plant is operating in steady state.

After the temperature that the water must have upon return to the central thermal unit has been determined, the outdoor temperature detected by the outdoor climate sensor 4 is measured.

The index is obtained simply by adding the two values (algebraic sum) detected by the two sensors 3 and 4 (outdoor temperature Text and, on the return pipe of the water, Tmax-es, i.e., the maximum operating temperature).

Purely indicative values are cited below:
Outdoor temperature = + 5°C Text
Return temperature of the water = + 45°C Tmax-es
The reference index will be equal to Text+Tmax-es = (+5 + (+45)) = 50 50 will be the heat index of the building.

To obtain, instant by instant, the value that the temperature of the water must have as the outdoor weather conditions vary, it is sufficient to subtract, instant by instant, the outdoor temperature detected in that instant from the reference index.

The table below shows that the return temperature of the water remains closely linked to and dependent on the outdoor temperature and increases or decreases even in the presence of small daily variations. It is obvious that the return temperature from the building increases only if the temperature of the water entering the building increases, and vice versa.

| Heat index of the building | Outdoor temperature Text | Temperature of the water |
|---|---|---|
| **A** | **B** | **C = A - B** |
| 50 | 4° | 46° |
| 50 | 3° | 47° |
| 50 | 2.5° | 47.5° |
| 50 | 1.5° | 48.5° |
| 50 | 0° | 50° |
| 50 | -0.5° | 50.5° |
| 50 | -1° | 51° |
| 50 | -2° | 52° |
| 50 | -3° | 53° |
| 50 | -6° | 56° |
| 50 | -2° | 52° |
| 50 | 0° | 50° |
| 50 | +5° | 45° |
| 50 | +6° | 44° |
| 50 | +10° | 40° |

As shown in the table, to each increase or decrease of the outdoor temperature (column B) will correspond, by algebraic sum, a precise value of the temperature that the water must have upon return to the central thermal unit (column C) to which a specific value of the temperature of the supply water will correspond.

If the temperature of the water output from the boiler were calibrated to reach a given value (e.g. 75°C), as a result of the speed with which the water enters the boiler and exits therefrom and as a result of the heat loss undergone by the water while passing through the plant, it would take a great deal of time for the delivery temperature of the water to reach the set value (75°C). For this reason, the system of the present invention, having available the maximum power of the boiler and acting on the ON time, heating time and water circulation, is able to meter (in the same way as the mixer valve) the heat of the water output from the boiler.

The return temperature obtained from the calculation will determine the duration of the ON cycle; in fact, if this value increases, compared to the preceding cycle, the ON time of the boiler will also increase, and vice versa.

It is clear that, if at any time there is a change in the volume of the plant (e.g. due to the addition or removal of apartments - chronothermostats, total or partial exclusion or inclusion of diffusers - thermostatic valves), the ON time will vary as a consequence without any human or technical intervention. It is evident that the amount of water to be heated in the boiler increases and/or decreases.

The OFF time has been mentioned several times; it is stated here that this identifies in minutes the thermal hysteresis of the materials and the heat loss of the building.

In practice, in over 30 years of tests and in 10 years of use of the method that exploits the thermal hysteresis of the materials of which a heating plant is formed, it has been possible to obtain, with great certainty, the cooling times of the different materials, which are summarized below.
- Aluminium diffusers: in 22.5 minutes of OFF time there is a decrease of around 6°C of the temperature of the diffuser, sufficient for the water therein to still be considered hot and sufficient to maintain the building warm.
- Cast iron diffusers: the same temperature variations of 6°C are obtained in 35 minutes.
- Iron diffusers: the same temperature variations of 6°C are obtained in 18 minutes.
- Under-floor plant in steady state, the OFF times can be much longer, in fact small decreases in the room temperature start to occur only after OFF times of 45 minutes.

The aforesaid OFF times are crucial for identification of the first parameter to be used as a function of the material of which the plant is formed, but are often indicative values that require subsequent adjustments for the losses of the building.

An example: a plant is optimally built (pipes protected and well sized) with heavy aluminium radiators, the ideal OFF time is 22 minutes and 30 seconds. For the same building, if it were provided with cladding, the OFF time could be increased up to 35 minutes. In the same building without insulation (e.g. windows with drafts) the OFF time would be reduced from 22.5 to 18 minutes to obtain the same comfort. It is clear that upon installation of the system of the present patent application, the OFF time necessary for initial calibration of the system is initially suggested by experience, but to obtain an optimal calibration and consequently maximum savings with the right degree of comfort, a few adjustments may be necessary for the final determination of the OFF value of the building.

With regard to the OFF time, it should be noted that as this system is able to modify its ON time autonomously, it is also able, within certain limits, to self-adapt to comfort requirements at the expense of saving. An example of adaptation of the apparatus to comfort: it is sufficient to increase or decrease the value of the index identified at the time of installation to obtain the change also on the temperature value of the water. Beyond certain limits of variation of the index, the saving decreases, even if only by a few percentiles.

Therefore, on the apparatus it must be possible to manually change the OFF time with values ranging from 15 minutes to 45 minutes.

With regard to the phenomenon of accumulation of heat in the pipes in proximity to the central thermal unit: to prevent this phenomenon from negatively affecting the proper operation of the apparatus, the return temperature value of the water at each start of the ON phase must be ignored for a certain settable time.

On the basis of the experience gained, no central thermal unit exhibited incoherent values for over 12 minutes from the start of the ON phase, and therefore the aforesaid phenomenon must be prevented from negatively affecting the proper operation of the apparatus. At the end of the OFF time, and therefore at the start of the ON phase, no temperature value will be taken into consideration.

To avoid doubtful situations for the management software, the circulators must be restarted regardless of the measured value, so that the water accumulated in the central thermal unit is mixed with the cooler water coming from the building, which is undoubtedly cooler.

It will be noted that only after a few seconds from the start of the circulator the water will begin to decrease in temperature and only after several minutes it will drop below the operating value (Tmax-es) and continue to decrease further for several minutes even to 5 ÷ 7 degrees below the value Tmax-es, which in the example cited is 45°C. After a few more minutes the decrease will slow down and stop, then remains stopped for a few seconds before starting to increase as the water heated by the new ON cycle arrives.

Therefore, a timer that can inhibit reading of the temperature for a time variable from 3 minutes to 15 minutes must be provided.

Another useful, but not indispensable, measure that allows greater fine-tuning of calibration is correction of the positioning error of the outdoor sensor 4.

The outdoor sensor 4, positioned at one point, could follow the trend of the temperature variations with a certain delay (lag) compared to the actual climate temperature. This could result in a variation in the climatic temperature not being followed by a variation in the temperature of the water, although these differences would be between ½ and 1 degree, insignificant values as regards comfort. To prevent this phenomenon, the sensitivity of the outdoor sensor 4 must be increased, by providing a correction factor that can be set on software by means of a table.

A variation of 0.5° of outdoor temperature will correspond to a variation of 0.5°C of the temperature of the water, or will correspond to a variation of 1°C or more than 1°C. This is obtained easily with the correction table indicated.

The control system of the present invention is installed and calibrated as described below.

### Input signals

The point at which to insert the return temperature sensor 3 that must measure the temperature of the return water from the plant is identified. The provided sensors to be used are preferably PT100 sensors with self-adjustment of the length of the connection cable, so that the distance between the control unit 2 and the measurement point is not relevant and could exceed a few hundreds of meters without losing its sensitivity and reliability. Even if the temperature values in question are relative and not absolute values, care must be taken over positioning of the sensor in contact with the water pipe, attempting to isolate it properly from the outside environment, perhaps by inserting it into the sheath that insulates the pipe by a few centimetres.

The point at which to position the outdoor sensor 4 is identified, taking care that it is in contact with the exterior of the central thermal unit and that the sun never shines directly on it, then considering the seasons. Make sure that the outdoor sensor 4 does not undergo the effects of any heat sources and that there are no particular conditions that can influence its reading of the temperatures.

### Output Controls

The system is equipped with a 230V/10A NO-C-NC potential free changeover contact. The remote control switch(es) that control(s) the circulator(s) 105, is/are controlled with this contact. If possible, action is taken simultaneously also on the controls of the burner(s), and therefore these are also acted on. If the management program of the central thermal unit has the output contact TA, this contact is used to interrupt and reactivate the central thermal unit.

### Calibration

OFF time: based on the type of diffusers the OFF time is entered, which will be: aluminium = 22.5 minutes; cast iron = 30 minutes; iron = 18 minutes; under floor = 35 minutes; purely indicative values, useful for initial start of the plant

### Text Tmax-es

### Outdoor sensor correction factor:

| | | | | |
|---|---|---|---|---|
| starting correction factor 0 | = | 0.5° | = | 0,5° |
| correction factor 1 | = | 0.5° | = | 1.0° |
| correction factor 2 | = | 0.5° | = | 2.0° |

### Return water temperature reading exclusion time

The parameter of 9 minutes is chosen (bearing in mind that this parameter ranges from 5 to 15 minutes)

### Start

The sensors are positioned and the apparatus is switched on, ensuring that everything is operating at steady state. The temperature indications must reach stable values over time (the sensors detect variations even of the order of hundredths of degree and therefore it is necessary to ensure there are no variations to be certain that steady state conditions have been reached).

The START button is pressed. The apparatus will have determined the reference index of the system and begins its first OFF phase, which will last for the time set.

To ensure that everything is operating correctly, wait for the plant to start again and check how many minutes elapse from the start to the time in which the temperature of the water drops below the values Tmax-es by at least 1 / 2 degrees. In the example Tmax-es = 45°C
Typical example of a trend: 47° - 46° - 46° - 45.5° - **45°** - 44.5° - 44° - 43.5° - 43° - 42 ° - 43° - 43°, etc.
Verification of the start --------------------------------- off time = 10 minutes

Return water reading exclusion time set to 9, take it to 10.

At this point, calibration and fine tuning of the system could be finished and permanent, although over the next few days it is necessary to check that the desired comfort temperature has been achieved.

If it is colder, decrease the OFF time by ½ or 1 minute and vice versa. Always act by 30 seconds or maximum one minute at a time.

If the temperatures of any areas of the building differ greatly and this phenomenon was not present before installation of the apparatus, use the corrector of the outdoor sensor 4 to increase its sensitivity.

The novelty and inventive step of the present invention consist in the following functional characteristics:
- introducing predetermined OFF phases in boiler (101) operation by stopping the circulator(s) (105);
- the OFF time determines heat losses closely linked to the outdoor temperature and to the boiler (101) being switched off, which lead to evident reductions in the heat of the fluid during this OFF phase;
- after expiry of the OFF time, the circulator(s) is (are) are started again to restere the temperature of the return fluid from the building to the initial value (before the OFF phase), new ON phase, switch-on of the boiler (101);
- the method also provides to maintain the plant active to restore the temperature of the fluid in the return pipe (103) to the value it had before the OFF phase;
- the method then provides to determine and offset the further temperature variations of the fluid that will occur due to any different climate conditions (temperature variations); in fact, in the ON cycle, the fluid is returned to the temperature value obtained by subtracting the instantaneous value of the outdoor temperature from the comfort value identified;
- the system inputs into the plant the exact amount of heat subtracted during the OFF phase and the amount of heat that, in the subsequent OFF cycle, is subtracted or added due to the variation of the instantaneous atmospheric temperature detected.

The main characteristic of the present invention, i.e., the OFF phases in boiler operation, offers numerous and conspicuous functional advantages:
- it produces savings in the fuel consumption due to the OFF times introduced;
- it exploits the thermal hysteresis of the diffusers to maintain the temperature constant in the rooms during the OFF times;
- it purposely creates heat losses of the heating fluid during the OFF phases of the plant;
- it obtains, from reading the temperature of the fluid returning from the building, the effective heat lost by the fluid during the OFF phase and restores only the effective amount of heat lost and the heat that will be determined in the subsequent OFF phase, which is a function of the outdoor temperature.

According to the present invention, the temperature value to which the fluid must be taken to restore the operating temperature is obtained by a mathematical calculation comprising a reference and comfort index, obtained previously in operating and comfort conditions, and the outdoor temperature.

In practice, it has been found that the invention achieves the intended aim and objects.

In fact, a control system and method that is substantially advantageous compared to prior art systems has been provided.

The system described in Italian patent no. 1374040 acts by changing the management parameters only after a change has been recorded in the room. In fact, it changes the calibration values only when the state of the thermostat changes, and therefore the room and the person feel the variation first and then the control system acts to restore the temperature.

If the subsequent method described above were to function correctly without thermal drifts, it would react to the temperature variations before the room is affected by them. In fact, when the outdoor temperature varies, the temperature of the water in the plant also varies and the apparatus reacts before the room can be affected. However self-learning is affected by the problems described above.

The method of the present patent application, besides reacting adequately also for variations of outdoor temperature in the order of the hundredth of degree, acts even before the temperature of the water in the plant can be affected by the climate variation, thus even before the plant is affected and loses part of the heat.

The considerable advantages offered by the present invention are evident, considering that conventional systems operate on the basis of complex calculations and mathematical curves to determine the temperature that the supply water output from the boiler must have.

On the contrary, according to the present invention, determination of the value that the water must have upon return to the central thermal unit, and consequently the value that the supply water will have, is the result of a simple algebraic subtraction operation.

Moreover, none of the currently existing methods exploit the increases and decreases of outdoor temperature based on relative temperature values, all the methods tend to identify the absolute value of the climate, which is very difficult to identify.

The extreme simplification of the control process of the present invention with respect to prior art methods is evident and constitutes a great advantage in terms of constructive simplicity and reliability of the system.

It should be pointed out that with this method the heat to be input into the plant is corrected even before the difference in heat is felt.

For example, if during an OFF phase there is a drop in the outdoor temperature, while in conventional plants the heat loss must first occur and then action is taken, according to the present invention already in the subsequent ON phase the return temperature of the water (and therefore of the entire plant) is restored to a value that already takes into account the subsequent greater or lesser variation of outdoor temperature.

Of course the materials used and the sizes may be any, according to need.

## Claims

1. A heating plant comprising a control system, a boiler (101) for heating a fluid, at least one supply pipe (102), through which the hot fluid is sent to one or more radiators, and at least one return pipe (103), through which the fluid from the radiators returns to said boiler (101); said plant comprising at least one circulator (105); said control system further comprising a control unit (2) adapted to control said boiler (101) and said at least one circulator (105), a return temperature sensor (3), associated with said return pipe (103), and an outdoor temperature sensor (4) adapted to measure the outdoor temperature; said heating plant being **characterized in that** said control unit (2) is configured to perform the control method according to claim 3.

2. A heating plant according to claim 1, **characterized in that** said outdoor temperature sensor (4), not requiring an absolute temperature value but its trend over time, can be positioned on the threshold of an aeration window of said control unit (2), ensuring that the sun never shines directly on the fixing point.

3. A control method of a heating plant comprising a boiler (101) for heating a fluid, at least one supply pipe (102), through which the hot fluid is sent to one or more radiators, and at least one return pipe (103) through which the fluid from the radiators returns to said boiler (101), a return temperature sensor (3), an outdoor temperature sensor (4) and a circulator (105); said control method comprising the steps of:
- starting the plant, setting the heating temperature of the boiler liquid;
- with the plant started and operating in steady state, detecting the value of the return temperature of the water in said return pipe using the return temperature sensor (3);
- measuring the outdoor temperature detected by the outdoor temperature sensor (4) outside the room to be heated; said control method comprising further the steps of:
- determining a reference index by adding the temperature detected in said return pipe to the outdoor temperature detected by said outdoor temperature sensor (4);
- interrupting the operation of said boiler and the water circulation by said circulator (105) for a certain time, OFF phase;
- restarting said boiler and said water circulation, ON phase;
- detecting the value of the return temperature of the water in said return pipe;
- measuring the outdoor temperature detected by said outdoor temperature sensor (4) outside the room to be heated;
- obtaining the value that the water in said return pipe must have by subtracting the detected outdoor temperature from said reference index;
- maintaining said boiler in said ON phase until reaching said value that the temperature of the water in said return pipe must have;
- repeating the aforesaid steps starting from said OFF phase.

4. A control method according to claim 3, **characterized in that** said value of return temperature of the water at each start of the ON phase is ignored for a certain settable time.

5. A control method according to claim 3, **characterized by** excluding reading of the temperature for a variable time from 3 minutes to 15 minutes.

6. A control method according to claim 3, **characterized in that** said step of measuring the outdoor temperature comprises a correction factor preset by means of a correction table.

## Patentansprüche

1. Heizungsanlage, umfassend ein Steuersystem, einen Heizkessel (101) zum Erhitzen eines Fluids, zumindest eine Zuleitung (102), durch die das heiße Fluid zu einem oder mehr Radiatoren geschickt wird, und zumindest eine Rücklaufleitung (103), durch die das Fluid von den Radiatoren zum Heizkessel (101) zurückkehrt; wobei die Anlage zumindest eine Umwälzpumpe (105) umfasst; wobei das Steuersystem ferner eine Steuereinheit (2), die zum Steuern des Heizkessels (101) und der zumindest einen Umwälzpumpe (105) geeignet ist, einen Rücklauftemperatursensor (3), der der Rücklaufleitung (103) zugeordnet ist, und einen Außentemperatursensor (4) umfasst, der zum Messen der Außentemperatur geeignet ist; wobei die Heizungsanlage **dadurch gekennzeichnet ist, dass** die Steuereinheit (2) zum Ausführen des Steuerungsverfahrens nach Anspruch 3 konfiguriert ist.

2. Heizungsanlage nach Anspruch 1, **dadurch gekennzeichnet, dass** der Außentemperatursensor (4), der keinen absoluten Temperaturwert erfordert, sondern seine Tendenz im Zeitverlauf, an der Schwelle eines Lüftungsfensters der Steuereinheit (2) angeordnet sein kann, wodurch gewährleistet ist, dass die Sonne niemals auf den Befestigungspunkt fällt.

3. Steuerungsverfahren für eine Heizungsanlage, die einen Heizkessel (101) zum Erhitzen eines Fluids, zumindest eine Zuleitung (102), durch die das heiße Fluid zu einem oder mehr Radiatoren geschickt wird, und zumindest eine Rücklaufleitung (103), durch die das Fluid von den Radiatoren zum Heizkessel (101) zurückkehrt, einen Rücklauftemperatursensor (3), einen Außentemperatursensor (4) und eine Umwälzpumpe (105) umfasst;
wobei das Steuerungsverfahren die folgenden Schritte umfasst:
- Starten der Anlage, Einstellen der Heiztemperatur der Heizkesselflüssigkeit;
- bei gestarteter Anlage und Betrieb im stabilen Zustand, Erkennen des Werts der Rücklauftemperatur des Wassers in der Rücklaufleitung unter Benutzung des Rücklauftemperatursensors (3);
- Messen der Außentemperatur, die durch den Außentemperatursensor (4) außerhalb des Raums, der geheizt werden soll, erkannt wird;
wobei das Steuerungsverfahren ferner die folgenden Schritte umfasst:
- Bestimmen eines Referenzindex durch Addieren der Temperatur, die in der Rücklaufleitung erkannt wird, zur Außentemperatur, die durch den Außentemperatursensor (4) erkannt wird;
- Unterbrechen des Betriebs des Heizkessels und der Wasserumwälzung durch die Umwälzpumpe (105) für eine bestimmte Zeit, AUS-Phase;
- Neustarten des Heizkessels und der Wasserumwälzung, EIN-Phase;
- Erkennen des Werts der Rücklauftemperatur des Wassers in der Rücklaufleitung;
- Messen der Außentemperatur, die durch den Außentemperatursensor (4) außerhalb des Raums, der geheizt werden soll, erkannt wird;
- Erhalten des Werts, den das Wasser in der Rücklaufleitung aufweisen muss, durch Subtrahieren der erkannten Außentemperatur vom Referenzindex;
- Beibehalten des Heizkessels in der EIN-Phase bis der Wert erreicht ist, den die Temperatur des Wassers in der Rücklaufleitung aufweisen muss;
- Wiederholen der obigen Schritte ab der AUS-Phase.

4. Steuerungsverfahren nach Anspruch 3, **dadurch gekennzeichnet, dass** der Rücklauftemperaturwert des Wassers bei jedem Start der EIN-Phase für eine bestimmte, einstellbare Zeit ignoriert wird.

5. Steuerungsverfahren nach Anspruch 3, **gekennzeichnet durch** Ausschließen des Ablesens der Temperatur für eine variable Zeit von 3 Minuten bis 15 Minuten.

6. Steuerungsverfahren nach Anspruch 3, **dadurch gekennzeichnet, dass** der Schritt des Messens der Außentemperatur einen Korrekturfaktor umfasst, der mittels einer Korrekturtabelle voreingestellt ist.

## Revendications

1. Installation de chauffage comprenant un système de contrôle, une chaudière (101) pour chauffer un fluide, au moins un conduit d'alimentation (102) à travers lequel le fluide chaud est envoyé vers un ou plusieurs radiateur(s), et au moins un conduit de retour (103) à travers lequel le fluide venant des radiateurs retourne vers ladite chaudière (101) ; ladite installation comprenant au moins un circulateur (105) ; ledit système de contrôle comprenant en outre une unité de contrôle (2) adaptée pour contrôler ladite chaudière (101) et ledit au moins un circulateur (105), un capteur de température de retour (3) associé audit conduit de retour (103), et un capteur de température extérieure (4) adapté pour mesurer la température extérieure ; ladite installation de chauffage étant **caractérisée en ce que** ladite unité de contrôle (2) est configurée pour exécuter le procédé de contrôle selon la revendication 3.

2. Installation de chauffage selon la revendication 1, **caractérisée en ce que** ledit capteur de température extérieure (4), ne nécessitant pas de valeur de température absolue mais sa tendance sur la durée, peut être positionné sur le seuil d'une fenêtre d'aération de ladite unité de contrôle (2), en s'assurant que le soleil ne brille jamais directement sur le point de fixation.

3. Procédé de contrôle d'une installation de chauffage comprenant une chaudière (101) pour chauffer un fluide, au moins un conduit d'alimentation (102) à travers lequel le fluide chaud est envoyé vers un ou plusieurs radiateur(s), et au moins un conduit de retour (103) à travers lequel le fluide venant des radiateurs retourne vers ladite chaudière (101), un capteur de température de retour (3), un capteur de température extérieure (4) et un circulateur (105) ;
ledit procédé de contrôle comprenant les étapes de :
- démarrer l'installation, régler la température de chauffage du liquide de la chaudière ;
- avec l'installation démarrée et fonctionnant régulièrement, détecter la valeur de la température de retour de l'eau dans ledit conduit de retour en utilisant le capteur de température de retour (3) ;
- mesurer la température extérieure détectée par le capteur de température extérieure (4) hors de la pièce à chauffer ;
ledit procédé de contrôle comprenant en outre les étapes de :
- déterminer un indice de référence en ajoutant la température détectée dans ledit conduit de retour à la température extérieure détectée par ledit capteur de température extérieure (4) ;
- interrompre le fonctionnement de ladite chaudière et la circulation d'eau par ledit circulateur (105) pendant un certain temps, phase OFF ;
- redémarrer ladite chaudière et ladite circulation d'eau, phase ON ;
- détecter la valeur de la température de retour de l'eau dans ledit conduit de retour ;
- mesurer la température extérieure détectée par ledit capteur de température extérieure (4) hors de la pièce à chauffer ;
- obtenir la valeur que l'eau dans ledit conduit de retour doit avoir en soustrayant la température extérieure détectée à partir dudit indice de référence ;
- maintenir ladite chaudière dans ladite phase ON jusqu'à atteindre ladite valeur que la température de l'eau dans ledit conduit de retour doit avoir ;
- répéter les étapes mentionnées ci-dessus en démarrant depuis ladite phase OFF.

4. Procédé de contrôle selon la revendication 3, **caractérisé en ce que** ladite valeur de température de retour de l'eau à chaque démarrage de la phase ON est ignorée pendant un certain temps réglable.

5. Procédé de contrôle selon la revendication 3, **caractérisé par** l'exclusion de la lecture de la température pendant un temps pouvant varier de 3 minutes à 15 minutes.

6. Procédé de contrôle selon la revendication 3, **caractérisé en ce que** ladite étape de mesurer la température extérieure comprend un facteur de correction préréglé au moyen d'un tableau de correction.
